# FASCICULE DE BREVET EUROPEEN

(11) **EP 2 792 659 B1**
(45) Date de publication et mention de la délivrance du brevet: **23.11.2022**
(21) Numéro de dépôt: 14163880.9
(22) Date de dépôt: 08.04.2014
(51) Int. Cl.: C04B 41/49

(54) **Produit liquide pour le durcissement et la protection de surfaces minérales**
Flüssiges Produkt zum Härten und Schützen von mineralischen Oberflächen
Liquid product for hardening and protecting mineral surfaces

(30) Priorité: 16.04.2013 FR 1353442
(43) Date de publication de la demande: 22.10.2014
(73) Titulaire: CBA World S.à.r.l., 2449 Luxembourg (LU)
(72) Inventeur: WAYSER, Barnabé, 75008 Paris (FR)
(74) Mandataire: Office Freylinger

(56) Documents cités:
- WO-A2-2007/127267
- US-A- 5 990 212
- DATABASE WPI Week 199803 Thomson Scientific, London, GB; AN 1998-027975 XP002717663, & JP H09 286676 A (TOA GOSEI CHEM IND LTD) 4 novembre 1997 (1997-11-04)

## Description

La présente invention concerne un produit liquide pour le durcissement, la consolidation et la protection contre les taches et les infiltrations d'eau de surfaces minérales, par exemple en pierre naturelle, en béton, en enduits, en terre cuite, en carrelages poreux ou en brique.

On sait que le silicate de potassium, le fluorosilicate de magnésium et le silicate de méthyle ont été utilisés pour durcir les pierres. De même, d'autres composés, tels que le silicate de sodium, des sels de lithium et de strontium (voir US 2011/0197789) ou des combinaisons de ces composés (voir US2011/023239) ont prouvé leur efficacité pour durcir les surfaces, notamment les surfaces en béton et en ciment.

Certains de ces produits, en particulier ceux à base de sels de lithium ou de strontium, sont plus spécifiquement utilisés comme produits de cure du béton pour permettre un meilleur séchage des chapes de béton dans le but de limiter les fissurations et le faïençage.

En revanche, ces produits de durcissement ne permettent qu'une faible protection hydrophobe. Aussi, pour augmenter la protection hydrophobe des surfaces minérales, il est nécessaire d'appliquer, après le durcisseur, un second produit d'imprégnation à base de composés acryliques ou siliconés. Cela implique le passage de plusieurs couches et des attentes de séchage entre elles. De plus, la plupart de ces formulations donnent un effet mouillé aux surfaces traitées et sont en phase solvant.

La présente invention a pour objet de permettre, à la fois, un durcissement et une consolidation, non plus seulement de surface, mais en profondeur des surfaces minérales et d'apporter, de plus, de nouvelles propriétés de protection hydrophobe et anti-taches, tout en étant invisible.

A cette fin, selon l'invention, le produit liquide pour le durcissement et la protection de surfaces minérales est remarquable :
- en ce qu'il comporte, pour 100g de produit :
   - de 30 à 50 g de silicate d'éthyle,
   - de 3 à 20 g de résines fluorées,
   - de 30 à 50 g d'agent pénétrant hydrophobe sélectionné parmi les silanes autres que le silicate d'éthyle.

Le demandeur a en effet trouvé qu'en associant du silicate d'éthyle et des résines fluorées, il obtenait un produit apte à exercer, à la fois, une action de durcissement et une action hydrofuge. De plus, grâce au silane qui agit comme un agent pénétrant hydrophobe, le silicate d'éthyle et les résines fluorées sont entraînés en profondeur dans la matière minérale. Le produit pénètre au cœur de la matière minérale et peut alors exercer son action de durcissement et de protection hydrophobe et anti-taches non seulement en surface, mais également en profondeur. Les phénomènes de désagrégement et d'efflorescence sont alors limités, réduisant, par conséquent, l'usure de la surface et la production de poussière. La pénétration du produit dans la matière réduit la porosité, ce qui limite les remontées capillaires remédiant aux problèmes d'humidité, notamment dans les travaux souterrains. Ainsi, les supports poreux ou même faiblement poreux, tels que la pierre, la brique, le carrelage et les enduits à base de ciment sont ainsi protégés contre les taches et les salissures en plus d'être durcis et consolidés.

De plus, il a été observé que la protection apportée par le produit selon l'invention est invisible après séchage et sans aucun « effet mouillé » de la surface traitée. En effet, puisque le silicate d'éthyle est un liquide incolore, le produit liquide conforme à la présente invention ne nécessite pas de comporter un solvant, ce qui rend ce produit très efficace avec un temps de séchage réduit.

A ce sujet, on remarquera que les documents WO 2007/127267A, US 5 990 212A et JP H09 286676A décrivent des produits de traitement comportant des résines fluorées et un silane. Toutefois, aucun de ces produits connus ne contient de silicate d'éthyle apte à les rendre liquide, mais soit comporte un solvant organique (WO 2007/127267A), soit se trouve en phase aqueuse (US 5 990 212A et JP H09 286676A).

Dans le produit de la présente invention, les résines fluorées sont avantageusement à base de méthacrylate fluoré.

Ainsi, grâce à la présente invention, on obtient un produit durcisseur et consolidateur en surface et en profondeur. Ce produit peut être appliqué sur un grand nombre de surfaces minérales et leur apporte, une fois traitées, des propriétés anti-poussière, hydrofuges et oléofuges. L'ensemble de ces propriétés est obtenu avec l'application d'un seul produit, évitant le passage de plusieurs produits avec un séchage et une attente entre chaque passage. Cela limite également les risques d'incompatibilité entre les différents produits. On obtient ainsi un gain de temps et de productivité très important dans le domaine du bâtiment et de la construction.

Le produit selon l'invention peut être appliqué non seulement sur des surfaces en béton, sec ou humide, mais également sur d'autres surfaces telles que la pierre naturelle, les enduits, la terre cuite, les carrelages poreux ou la brique. Il peut être utilisé, aussi bien pour la restauration des ouvrages anciens, que pour les constructions neuves.

## Revendications

1. Produit liquide pour le durcissement et la protection de surfaces minérales, **caractérisé en ce qu'**il comporte, pour 100 g de produit :
- de 30 à 50 g de silicate d'éthyle,
- de 3 à 20 g de résines fluorées,
- de 30 à 50 g d'agent pénétrant hydrophobe sélectionné parmi les silanes autres que le silicate d'éthyle.

2. Produit liquide selon la revendication 1,
**caractérisé en ce que** les résines fluorées sont à base de méthacrylate fluoré.

3. Utilisation du produit liquide selon l'une des revendications 1 ou 2 par application sur des surfaces minérales pour leur apporter, une fois traitées, des propriétés anti-poussière, hydrofuges et oléofuges.

4. Utilisation du produit liquide selon l'une des revendications 1 ou 2 pour l'application sur des surfaces en béton sec ou humide, ou sur d'autres surfaces telles que la pierre naturelle, les enduits, la terre cuite, les carrelages poreux ou la brique.

5. Utilisation selon la revendication 4 pour la restauration des ouvrages anciens ou pour les constructions neuves.

## Patentansprüche

1. Flüssiges Produkt zum Härten und Schutz von mineralischen Oberflächen, **dadurch gekennzeichnet, dass** es für 100 g Produkt umfasst:
- von 30 bis 50 g Ethylsilikat,
- von 3 bis 20 g fluorierte Harze,
- von 30 bis 50 g hydrophobes Penetrationsmittel, die aus Silanen ausgewählt sind, bei denen es sich nicht um Ethylsilikat handelt.

2. Flüssiges Produkt nach Anspruch 1,
**dadurch gekennzeichnet, dass** die fluorierten Harze auf der Basis von fluoriertem Methacrylat sind.

3. Verwendung des flüssigen Produkts nach einem der Ansprüche 1 oder 2 zum Auftragen auf mineralische Oberflächen, um diesen, sobald sie behandelt wurden, staubverhindernde, wasserabweisende und ölabweisende Eigenschaften zu verleihen.

4. Verwendung des flüssigen Produkts nach einem der Ansprüche 1 oder 2 zum Auftragen auf Oberflächen aus Trocken- oder Feuchtbeton oder auf andere Oberflächen, wie Naturstein, Putz, Terrakotta, poröse Fliesen oder Ziegelstein.

5. Verwendung nach Anspruch 4 zur Restaurierung von alten Bauwerken oder für Neubauten.

## Claims

1. A liquid product for hardening and protecting mineral surfaces, **characterised in that** it comprises, per 100 g of product:
- from 30 to 50 g of ethyl silicate,
- from 3 to 20 g of fluorinated resins,
- from 30 to 50 g of hydrophobic penetrating agent selected from silanes other than ethyl silicate.

2. A liquid product according to Claim 1, **characterised in that** the fluorinated resins are based on fluorinated methacrylate.

3. Use of the liquid product according to one of Claims 1 or 2 by application onto mineral surfaces to provide them, once treated, with dust-, water- and oil-repellent properties.

4. Use of the liquid product according to one of Claims 1 or 2 for application onto dry or wet concrete surfaces, or onto other surfaces such as natural stone, renders, terracotta, porous tiles or brick.

5. Use according to Claim 4 for restoring old structures or for new constructions.
